# EUROPEAN PATENT SPECIFICATION

(11) **EP 2 404 786 B1**
(45) Date of publication and mention of the grant of the patent: **01.03.2017**
(21) Application number: 11172511.5
(22) Date of filing: 04.07.2011
(51) Int. Cl.: B60R 16/02

(54) **Wire harness wiring unit and wire harness wiring assembly having the same**
Verdrahtungseinheit für Kabelbäume und Verdrahtungsanordnung für Kabelbäume
Unité de câblage d'un faisceau de câbles et ensemble de câblage d'un faisceau de câbles doté de celle-ci

(30) Priority: 05.07.2010 JP 2010152698
(43) Date of publication of application: 11.01.2012
(73) Proprietor: YAZAKI CORPORATION, Minato-ku Tokyo 108-8333 (JP)
(72) Inventor: Yamashita, Takayuki, Hiroshima-shi, Hiroshima 732-0045 (JP)
(74) Representative: Grünecker Patent- und Rechtsanwälte PartG mbB

(56) References cited:
- EP-A1- 1 736 368
- EP-A2- 1 241 054
- DE-A1- 10 118 205
- US-A- 5 962 814
- US-A1- 2007 084 619

## Description

### Cross Reference to Related Application

This patent application is based on the priority application Japanese Patent Application No. 2010-152698.

### Background of the Invention

### Field of the Invention

The present invention relates to a wire harness wiring unit provided to a base plate adapted to be mounted to a vehicle body, the base plate being for example an interior panel to be mounted to a ceiling surface of the vehicle. The present invention further relates to a wire harness wiring assembly having the wire harness wiring unit.

### Description of the Related Art

EP A 736 368 A discloses a wire harness wiring unit provided to a base plate adapted to be mounted to a vehicle body, the wire harness wiring unit comprising a wire harness having a distal end portion extending from an outer edge of the base plate and a proximal end portion continuous with the distal end potion, the proximal end portion being mounted to the base plate and provided with an extra length portion with a predetermined length located between one end of the proximal end portion and the other end of the proximal end portion located opposite to the one end. This document also discloses a rod-like harness support fixed to the proximal end portion from the other end of the proximal end portion to the extra length portion in parallel with the proximal end portion. Furthermore, this document describes a first mounting member and a second mounting member.

A motor vehicle is provide with various electronic equipments such as a car navigation system, an audio device and various lamps. These electronic equipments are supplied with electricity from a power source, e.g. a battery, via a wire harness (which is constituted of a plurality of electric wires bound together) wired to the vehicle. Furthermore, such electronic equipment transmits and receives control information to and from an electric control unit or the like.

Conventionally, during a manufacturing process of the vehicle, the above-described wire harness is mounted directly to the vehicle body to be wired to the vehicle body. Thus, when mounting the wire harness to the vehicle body, it is required to first locate the wire harness along the predetermined locations on the vehicle body, followed by fixing a plurality of portions of the wire harness to the vehicle body by an adhesive tape, a bracket or the like. Thus, the work efficiency is low, and it takes long time to mount the wire harness to the vehicle body, causing an increase in the manufacturing cost. Moreover, in case of mounting the wire harness to a ceiling surface of the vehicle body, a worker is required to work in a looking-up posture during the manufacturing process, further lowering the work efficiency.

In view of the problems described above, for example Japanese Patent Application Publication No. 2000-335329 discloses a wire harness wiring assembly which is assembled in a separate process in the manufacturing process of the vehicle. In this wire harness wiring assembly, the wire harness is prewired to a base plate (e.g. an interior panel) adapted to be mounted to the ceiling surface of the vehicle. Then, using this wire harness wiring assembly, the wire harness is mounted to the vehicle body at the same time mounting the base plate to the ceiling surface, thereby improving the work efficiency in the manufacturing process of the vehicle and decreasing the manufacturing cost.

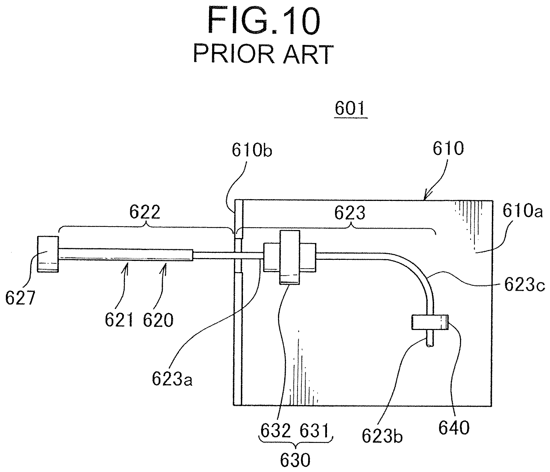

However, for the above-described wire harness wiring assembly, the wire harness is fixed to the base plate by a fixture such as a bracket which restricts the movement of the wire harness. Thus, there is a problem that, when using the wire harness with a short length, a portion of this wire harness extending out of the base plate may be too short to connect a connector provided at an end of the wire harness to an external electric component. On the other hand, when using the wire harness with a long length, a portion of this wire harness extending out of the base plate may be too long. In this case, there is produced an excess in the length of the wire harness and this extra length may curve (bend) and interfere with a decorative cover when mounting the decorative cover to the wire harness wiring assembly to cover the wire harness extending out of the base plate. Thus, there is a problem that the work efficiency is adversely affected by the lack or the excess in the length of the wire harness. In view of this, Fig. 10 shows another conventional wire harness wiring assembly proposed to address the above-described problem.

The wire harness wiring assembly 601 shown in Fig. 10 includes an interior panel 610 as a base plate adapted to be mounted to a ceiling surface of in a vehicle, a wire harness 620, a first mounting member 630 including a corrugated tube 631 and an adhesive tape 632, and a second mounting member 640 including an adhesive tape. The wire harness 620 includes a main line (not shown) and a branch line 621, the branch line 621 including a distal end portion 622 and a proximal end portion 623. In addition, the branch line 621 is provided with a connector 627 adapted to be connected with an external electric component at an end of the branch line 621. The corrugated tube 631 is fixed on the upper surface 610a of the interior panel 610 by the adhesive tape 632.

The distal end portion 622 is arranged to extend from an outer edge 610b of the interior panel 610. The proximal end portion 623 is arranged on an upper surface 610a of the interior panel 610. One end 623a of the proximal end portion 623 located adjacent to the distal end portion 622 is inserted into the corrugated tube 631 such that the distal end portion 622 can move in a direction of adjusting the length of the distal end portion 622.

Thus, according to the above-described conventional wire harness wiring assembly 601, the one end 623a of the proximal end portion 623 adjacent to the distal end portion 622 is mounted to the base plate using the first mounting member 630 such that the distal end portion 622 of the branch line 621 can move in a direction of adjusting the length of the distal end portion 622 (i.e. a direction toward or away from the outer edge of the interior panel 610 and a direction in which the distal end portion 622 is pushed into or drawn out from the interior panel 610). Thus, the length of the distal end portion 622 can be adjusted, improving the mounting of the wire harness wiring assembly 601 and the decorative cover.

### Summary of the Invention

### Problems to be Solved

However, for the wire harness wiring assembly 601 described above, when the distal end portion 622 is moved toward (pushed into) the outer edge of the interior panel 610 to adjust the length of the distal end portion 622, a portion of the distal end portion 622 pushed into the interior panel 610 becomes the extra length 623c (i.e. adds length to the extra length 623c) of the proximal end portion 623. As a result, due to an arrangement of the proximal end portion 623 or due a curve (a curve which is inherent in some wire harnesses) of the wire harness constituting the proximal end portion 623, the proximal end portion 623 curves between the first mounting member 630 and the second mounting member 640 in a direction perpendicular to the upper surface 610a of the interior panel 610. As a result, the extra length portion 623c of the proximal end portion 623 may contact with the ceiling surface of the vehicle body, producing unwanted noise as well as damaging the wire harness.

An object of the present invention is thus to solve the above-described problem by providing a wire harness wiring unit and a wire harness wiring assembly which can regulate a direction of the curve of the wire harness produced when adjusting the length of a portion of the wire harness extending out of the base plate.

### Solution to Problem

The above and other objects of the invention are achieve by the wire harness wiring unit according to claim 1. Preferred embodiments are claimed in the dependent claims.

### Advantageous Effect of the Invention

According to the first claim of the present invention, when the distal end portion of the wire harness is moved in the direction of adjusting the length of the distal end portion, the length of the extra length portion of the proximal end portion is increased or decreased, thereby making the rod-like harness support fixed to the extra length portion to move along the base plate around a support point at which the harness support is attached to the base plate by the second mounting member. Thus, the extra length portion to which the harness support is attached also moves along the base plate, thereby preventing the extra length portion to curve in a direction perpendicular to the base plate. As a result, the direction of the
curve of the wire harness can be regulated (limited), avoiding the contact between the wire harness and the vehicle body and preventing the production of the unwanted noise during the drive as well as the damage to the wire harness.

According to the second claim of the present invention, the harness support is mounted to the base plate by the adhesive member so as to move along the base plate. Thus, an adhesive member may be an adhesive tape or a flexible synthetic resin material or the like which is inexpensive and easy-to-apply. Thus, the manufacturing cost can be decreased.

According to the third claim of the present invention, the wire harness can be protected by the cover. Furthermore, since the cover adds weight to the distal end portion, the distal end portion is weighted downwardly. If the cover is not provided, when mounting the base plate to a ceiling surface of the vehicle body along with mounting other components (such as a glass component) near the wire harness, the distal end portion may curve upwardly due to a curve inherent in the wire harness which constitutes the distal end portion, causing the wire harness to be get caught under the other components. In contrast, according to the present invention, the above-described problem of the wire harness getting caught under the other components can be avoided, thereby improving the work efficiency. Furthermore, the cover also serves to increase the outer diameter of the distal end portion. Thus, when the distal end portion is moved towards the base plate, the cover abuts on (is stopped by) the first mounting member or the base plate. In such a manner, the cover can serve as a stopper for limiting a range of movement of the distal end portion, thereby preventing the distal end portion to be pushed into the base plate more than necessary. Thus, the work efficiency can be improved.

### Brief Description of the Drawings

Fig. 1 is an illustration of a wire harness wiring assembly of the present invention according to one embodiment;
Fig. 2 is a cross-sectional view of the wire harness wiring assembly taken along a II-II line shown in Fig. 1;
Fig. 3 is a cross-sectional view of the wire harness wiring assembly taken along a III-III line shown in Fig. 1;
Fig. 4 is an explanatory illustration showing the wire harness wiring assembly in which the length of a distal end portion of a wire harness is extended;
Fig. 5 is an explanatory illustration showing the wire harness wiring assembly in which the length of the distal end portion of the wire harness is shortened;
Fig. 6A is a partial view of a first embodiment of a wire harness wiring assembly of the present invention;
Fig. 6B is a cross sectional view of the first embodiment of the wire harness wiring assembly of the present invention taken along a line IV-IV shown in Fig. 6A;
Fig. 7A is a partial view of a second embodiment of a wire harness wiring assembly of the present invention;
Fig. 7B is a cross sectional view of the second embodiment of the wire harness wiring assembly of the present invention taken along a line V-V shown in Fig. 7A;
Fig. 8 is a partial view of a third embodiment of a wire harness wiring assembly of the present invention;
Fig. 9 a partial view of a fourth embodiment of a wire harness wiring assembly of the present invention; and
Fig. 10 is an illustration showing a conventional wire harness wiring assembly.

### Detailed Description of the Invention

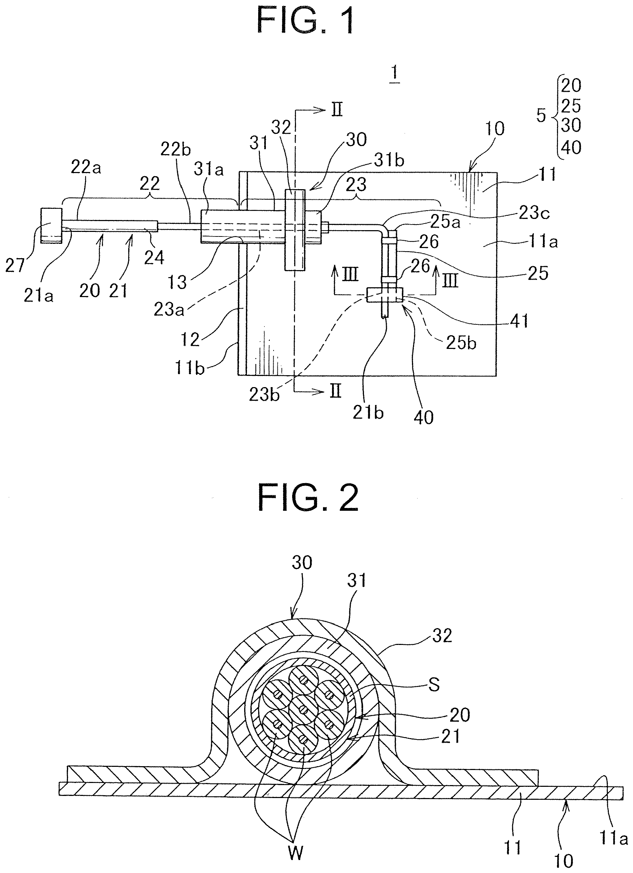

Referring to Fig. 1 through Fig. 5, the following describes an exemplary embodiment of a wire harness wiring unit as well as a wire harness wiring assembly according to the present invention.

A wire harness wiring assembly 1 of the present invention according to one embodiment serves to decorate a vehicle interior by covering a ceiling surface of the vehicle, while supplying electric power to electric components provided around the ceiling surface via a wire harness. Of course, the present invention is not limited to this embodiment, and for example, the wire harness wiring assembly of the present invention may not be designed for a decorative purpose and may be provided between the interior panel and the ceiling surface so as to hide from a passenger.

As shown in the drawings, the wire harness wiring assembly 1 includes an interior panel 10 as a base plate and a wire harness wiring unit 5.

The interior panel 10 is arranged to be mounted to the ceiling surface in the vehicle. The interior panel 10 includes a main body 11 and a wall 12.

The main body 11 is formed into a rectangular plate-like corresponding with the ceiling surface of the vehicle. The main body 11 is provided with a decorative layer (not shown) at a lower surface of the main body 11 facing inside the vehicle. The decorative layer may be formed of a woven or unwoven fabric made of synthetic or natural fibers, or synthetic resin processed to have a leather texture. This decorative layer decorates the vehicle interior for an aesthetic purpose. Furthermore, an upper surface 11a of the main body 11 of the interior panel 10 facing the ceiling surface (i.e. the upper surface 11a corresponding to an upper surface of the interior panel 10) is provided with the wire harness wiring unit 5.

The wall 12 is provided at an outer edge 11b of the main body 11 adjacent to a vehicle front (i.e. the outer edge 11b corresponding to an outer edge of the interior panel 10) so as to extend perpendicularly from the outer edge 11b in a direction of the side of the upper surface 11a. The wall 12 is further provided with a notch 13. This notch 13 is formed by cutting an upper edge of the wall 12 such that the notch 13 conforms to an outer shape of a later-described corrugated tube 31 of a first mounting member 30. A later-described branch line 21 of a wire harness 20 passed through the corrugated tube 31 is arranged to extend out from the notch 13 together with the corrugated tube 31.

The wire harness wiring unit 5 includes the wire harness 20, a harness support 25, the first mounting member 30 and a second mounting member 40.

As shown in Fig. 2, the wire harness 20 is constituted of a plurality of covered electric wires W bonded together by a sheath S. The wire harness 20 includes a main line (not shown) and the branch line 21 branching from the main line.

One end 21a (not shown) at a tip of the branch line 21 is adapted to be connected to an electrical component to supply electric power. Thus the one end 21 a of the branch line 21 is provided with a connector 27 to be connected to the electric component provide at an upper portion of a windshield inside the vehicle. Such electric component may be an electric room mirror, a ceiling lamp, a vanity lamp, a rain detection device, an ETC device or the like. The other end 21b of the branch line 21 is connected to the main line of the wire harness 20. The branch line 21 is arranged to have a predetermined length which can be suitably determined according to the constitution of the wire harness wiring assembly 1.

The branch line 21 includes a distal end portion 22 located adjacent to a distal end of the branch line 21 and a proximal end portion 23 located adjacent to a proximal end of the branch line 21. The distal end portion 22 corresponds to a portion of the branch line 21 extending out of the interior panel 10 from the notch 13 of the wall 12 (i.e. from the outer edge 11b). In this embodiment the distal end portion 22 includes a portion of the branch line and a portion of the corrugated tube 31 of the later-described first mounting member 30. The one end 22a of the distal end portion 22 adjacent to the connector 27 is covered with a cover 24 made for example of polyvinyl chloride (PVC). The length of this cover 24 is designed to correspond with a minimum extending length of the distal end portion 22 extending out from the outer edge 11b of the interior panel 10.

The proximal end portion 23 is connected to the other end 22b of the distal end portion 22 located distant from the connector 27. The proximal end portion 23 corresponds to a portion of the branch line 21 located on the upper surface 11a of the main body 11 of the interior panel 10. The proximal end portion 23 includes an extra length portion 23c located between one end 23a of the proximal end portion 23 and the other end 23b of the proximal end portion 23 located opposite to the one end 23a. The extra length portion 23c is formed into an L-like bent shape and has a predetermined length.

The harness support 25 may be made of a synthetic resin which is harder than the wire harness 20, e.g. polypropylene (PP). The harness support 25 may be formed into a rod-like shape and may have a rectangular cross-sectional shape. The harness support 25 is fixed to the other end 23b and the extra length portion 23c using a bonding member such as a band and arranged parallel with the proximal end portion 23. Thus, the harness support 25 serves to support the proximal end portion 23 along the shape of the harness support 25 from the other end 23b to the extra length portion 23c of the proximal end portion 23. In addition, the shape of the harness support 25 may be selected arbitrarily without departing from the purpose of the present invention. For example, the harness support 25 may have a circular cross-section.

The first mounting member 30 serves to mount the one end 23a of the proximal end portion 23 to the upper surface 11 a of the interior panel 10. The first mounting member 30 includes the corrugated tube 31 and an adhesive tape 32.

The corrugated tube 31 may be a well-known electric wire protecting member made of synthetic resin and formed into a tube having a circular or ellipsoidal cross-section. The other end 22b of the distal end portion 22 and the one end 23a of the proximal end portion 23 are inserted into the corrugated tube 31.

For the corrugated tube 31, one end 31a of the corrugated tube 31 is arranged to extend out from the notch 13 of the wall 12, while the other end 31b is disposed on the upper surface 11a of the interior panel 10. In addition, a portion of the one end 31a of the corrugated tube 31 is fitted to the notch 13 to be supported by the wall 12. Also, the other end 31b of the corrugated tube 31 is mounted to the upper surface 11a by the adhesive tape 32.

By using the above-described corrugated tube 31, the other end 22b of the distal end portion 22 and the one end 23a of the proximal end portion 23 are mounted to the upper surface 11a of the interior panel 10, such that the distal end portion 22 can move along a direction of adjusting the length of the distal end portion 22 (i.e. a direction in which the distal end portion 22 is moved toward or away from the outer edge 11b of the interior panel 10 so that the distal end portion 22 is pushed into or drawn out from the interior panel 10).

Preferably, an inner diameter of the corrugated tube 31 (or a minor axis diameter, in case of the corrugated tube 31 having an ellipsoidal cross-section) is formed into the same or substantially the same size as an outer diameter of the portion of the branch line 21 inserted into the corrugated tube 31 (i.e. the outer diameters of the other end 22b of the distal end portion 22 and the one end 23 a of the proximal end portion 23). In this case, an inner periphery of the corrugated tube 31 and an outer periphery of the branch line 21 abut on with respect to each other, thereby allowing the proximal end portion 23 to be supported by the whole inner periphery (or portions of the inner periphery facing each other, in case of the corrugated tube 31 having an ellipsoidal cross-section) of the corrugated tube 31 even more firmly. Consequently, when an external force is applied to the distal end portion 22 in a direction of adjusting the length of the distal end portion 22, the inner periphery of the corrugated tube 31 and the outer periphery of one end 23a of the proximal end portion 23 slidably move with respect to each other, thereby adjusting the length of the distal end portion 22. Thus, the length of the distal end portion 22 can be adjusted as necessary. In addition, the distal end portion 22 can be prevented from freely moving in a direction of adjusting the length of the distal end portion 22 due to the movement of the moving vehicle.

Furthermore, the inner diameter (or the minor axis diameter, in case of the corrugated tube 31 having an ellipsoidal cross-section) of the corrugated tube 31 is formed smaller than the outer diameter of the cover 24 covering the branch line 21. Thus, when the distal end portion 22 is moved toward the outer edge 11b of the interior panel 10 (i.e. the distal end portion 22 is pushed into the interior panel 10), the cover 24 abuts on the corrugated tube 31. Thus, the corrugated tube 31 serves as a stopper for inhibiting the distal end portion 22 to move into the outer edge 11b more than necessary.

The second mounting member 40 includes an adhesive tape 41 for mounting the other end 25b of the harness support 25 located distant from the distal end portion 22 as well as the other end 23b of the proximal end portion 23 to the upper surface 11 a of the interior panel 10, such that an axis of a portion of the proximal end portion 23 adjacent to the other end 23b is perpendicular to an axis of a portion of the proximal end portion 23 adjacent to the one end 23 a, as shown in Fig. 1. Since the other end 25b of the harness support 25 is attached to the interior panel 10 by the adhesive tape 41, the harness support 25 is not fully-fixed on the interior panel 10, so the one end 25a of the harness support 25 located opposite to the other end 25b can move around the other end 25b (i.e. the other end 25b being a support point) along the upper surface 11a. In an alternative embodiment, the adhesive tape 41 described above may be replaced with a flexible synthetic resin material (i.e. the resin material has a flexibility when solidified) which, in a molten state, is arranged to cover the other end 25b of the harness support 25 and then movably attaches the other end 25b of the harness support 25 to the upper surface 11a of the interior panel 10, when solidified.

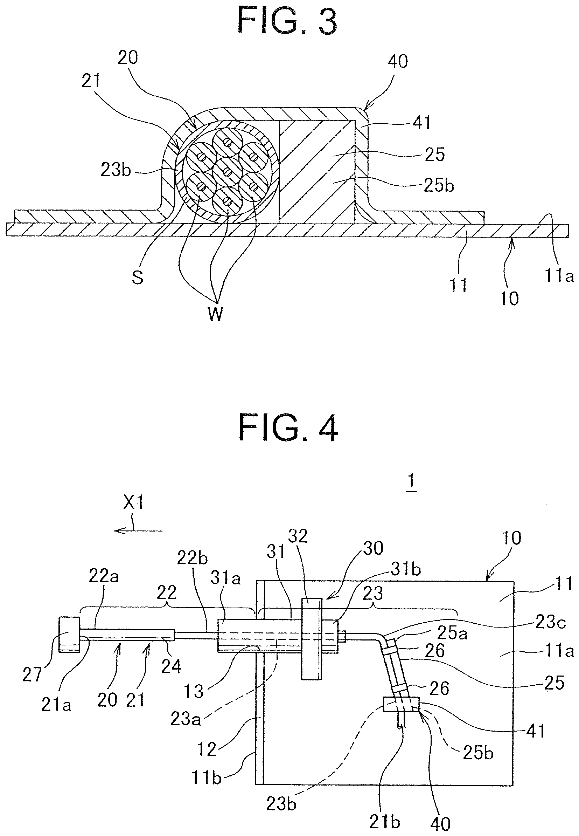

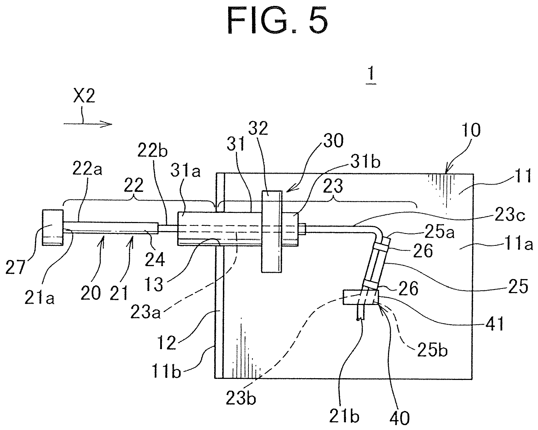

Next, referring now to Fig. 4 and Fig. 5, the following will describe an example of a function of the above-described wire harness wiring unit 5 and the wire harness wiring assembly 1.

The extra length portion 23c is provided to a portion of the proximal end portion 23 located between the first mounting member 30 and the second mounting member 40 (i.e. between the one end 23a and the other end 23b). This extra length portion 23 c is arranged to have looseness. Thus, when the distal end portion 22 is moved in a direction of drawing the distal end portion 22 out from the interior panel 10 (i.e. a direction indicated with "X1" in Fig. 4), a portion of the extra length portion 23c which is drawn out from the interior panel 10 becomes the distal end portion 22. Furthermore, when the distal end portion 22 is moved in a direction of pushing the distal end portion 22 into the interior panel 10 (i.e. a direction indicated with "X2" in Fig. 5), a portion (a length) of the distal end portion 22 pushed into the interior panel 10 becomes the extra length portion 23 c. Therefore, the length of the distal end portion 22 can be adjusted to be longer or shorter by adjusting the length (looseness) of the extra length portion 23c between the first mounting member 30 and the second mounting member 40.

For example, starting from a state shown in Fig. 1, when the distal end portion 22 of the branch line 21 is shorter than a desired length, the distal end portion 22 can be moved in a direction toward the outer edge 11b of the interior panel 10, i.e. the X1 direction, as shown in Fig. 4. Thus, the extra length portion 23c of the proximal end portion 23 is moved towards the first mounting member 30 and a portion of the proximal end portion 23 is drawn out of the interior panel 10, thereby increasing the length of the distal end portion 22. In this case, the one end 25a of the harness support 25 moved towards the first mounting member 30 together with the movement of the extra length portion 23c of the proximal end portion 23. In other words, the one end 25a pivotally moves around the other end 25b along the upper surface 11a in a direction toward the first mounting member 30.

Furthermore, starting from a state shown in Fig. 1, when the distal end portion 22 of the branch line 21 is longer than a desired length, the distal end portion 22 is moved in a direction toward the outer edge 11b, i.e. the X2 direction, as shown in Fig. 5. Thus, the length of the distal end portion 22 that has been moved adds length to the extra length portion 23c of the proximal end portion 23 located between the first and the second mounting members 30 and 40, while the proximal end portion 23 being moved away from the first mounting member 30. In such a manner, the length of the distal end portion can be shortened. In this case, along with the movement of the extra length portion 23c of the proximal end portion 23, the one end 25a of the harness support 25 moves away from the first mounting member 30. In other words, the one end 25a pivotally moves around the other end 25b along the upper surface 11 a in a direction away from the first mounting member 30. Thus, since the proximal end portion 23 moves together with the harness support 25 along the upper surface 11 a, the proximal end portion 23 can be prevented from being curved in a direction perpendicular to the upper surface 11 a.

In this embodiment, as shown in the drawings, the first mounting member 30 and the second mounting member 40 are arranged such that the axis of the portion of the proximal end portion 23 adjacent to the one end 23a is perpendicular to the axis of the portion of the proximal end portion 23 adjacent to the other end 23b. If this is not satisfied and the axis of the portion of proximal end portion 23 adjacent to the one end 23 a and the axis of the portion of the proximal end portion 23 adjacent to the other end 23b are arranged concentrically or parallel to each other, the direction in which the extra length portion 23 c will curve when the distal end portion 22 is pushed into the interior panel 10 cannot be determined. Thus, it requires a large space for receiving the increased length of the extra length portion 23 c. On the other hand, according to the present invention, since the axis of the portion of the proximal end portion 23 adjacent to the one end 23a and the axis of the portion of the proximal end portion adjacent to the other end 23b are arranged in different directions from each other, the extra length portion 23 c can be moved in a predetermined direction. Therefore, the above-mentioned space for receiving the increased extra length of the extra length portion 23c can be downsized. However, the present invention is not limited to this arrangement.

Next, the following will explain an example of a method for mounting the above-described wire harness wiring assembly 1 to a ceiling surface in the vehicle.

Firstly, the extra length portion 23c of the proximal end portion 23 is drawn out from the interior panel 10. Then, the connector 27 provided at the one end 21 a of the branch line 21 is connected to the electric equipments provided at the upper portion of the windshield inside the vehicle. Next, the interior panel 10 is mounted at the ceiling surface in the vehicle. Finally, the distal end portion 22 is moved in the direction towards the outer edge 11b to be pushed into the interior panel 10, thereby adjusting the length of the distal end portion 22. In such a manner, the wire harness wiring assembly 1 is mounted to the ceiling surface of the vehicle.

As described above, the length of the distal end portion 22 can be adjusted by increasing or decreasing the length of the distal end portion 22 (the extra length portion 23c of the proximal end portion 23), thereby preventing the decrease in the work efficiency due to a lack or an excess in the length of the wire harness 20.

In an alternative exemplary embodiment, the interior panel 10 may be mounted to the ceiling surface in the vehicle in the first step, followed by connecting the connector 27 to the electric component, followed by adjusting the length of the distal end portion 22. Alternatively, the proximal end portion 23 may be provided with a sufficient extra length portion 23c in the first step, followed by mounting the interior panel 10 to the ceiling surface in the vehicle, followed by adjusting the length of the distal end portion 22 to be longer to connect the connector 27 to the electric components. These alternative embodiments can also prevent a decrease in the work efficiency due to a lack or an excess in the length of the wire harness 20.

As described above, according to the present invention, there are provided the first mounting member 30 for mounting the one end 23a of the proximal end portion 23 of the branch line 21 to the interior panel 10 (i.e. to the upper surface 11 a), the rod-like harness support 25 fixed to the portion of the proximal end portion 23 between the other end 23b and the extra length portion 23c so as to be parallel to the proximal end portion 23, and the second mounting member 40 for mounting the other end 25b of the harness support 25 adjacent to the other end 23b of the proximal end portion 23 such that the harness support 25 can move along the interior panel 10. Thus, when the distal end portion 22 of the branch line 21 of the wire harness 20 is moved along the direction of adjusting the length of the distal end portion 22, the length of the extra length portion 23c which is continuous with the distal end portion 22 is increased or decreased. Thus, due to the increase and the decrease in the length of the extra length portion 23c, the rod-like harness support 25 fixed to the portion of the proximal end portion 23 moves along the interior panel 10 around the other end 25b which is mounted to the interior panel 10 by the second mounting member 40. Thus, since the extra length portion 23c is moved along the interior panel 10 together with the harness support 25, the extra length portion 23c can be prevented from curving in the direction perpendicular to the interior panel 10. As a result, the direction of the curve of the wire harness 20 can be regulated. Thus, the contact between the wire harness 20 and the vehicle body can be avoided, preventing the unwanted noise and the damage to the wire harness 20.

Furthermore, according to the present invention, the second mounting member 40 may be the adhesive tape 41 which is inexpensive to mount the harness support 25 to the interior panel 10 so as to move along the interior panel 10. Thus, the manufacturing cost can be reduced. Furthermore, the adhesive tape 41 may be any arbitral adhesive member which is also inexpensive and easy-to-apply, such as the flexible synthetic resin material.

Furthermore, according to the present invention, there is provide the cover 24 covering around the distal end portion 22, thus the distal end portion 22 can be protected by the cover 24. Furthermore, the cover 24 also serves to add weight to the distal end portion 22, thus the distal end portion 22 is weighted downwardly. If the cover 24 is not provided, when mounting the interior panel 10 to the ceiling surface of the vehicle body while mounting other components (such as a glass component) near the wire harness 20, the distal end portion 22 may curve upwardly due to a curve inherent in the wire harness constituting the distal end portion 22, causing the wire harness 20 to be get caught under the other components. On the other hand, according to the present invention, since the distal end portion 22 is weighted downwardly with the cover 24 as described above, the above-described problem of the wire harness 20 getting caught under the other components can be avoided, thereby improving the work efficiency. Furthermore, the cover 24 also serves to increase the outer diameter of the distal end portion 22, thus when the distal end portion 22 is moved towards the interior panel 10, the cover 24 abuts on (is stopped by) the corrugated tube 31 of the first mounting member 30. In such a manner, the cover 24 can serve as a stopper limiting a range of movement of the distal end portion 22, thereby preventing the distal end portion 22 to be pushed into the interior panel 10 more than necessary. Thus, the work efficiency can be improved.

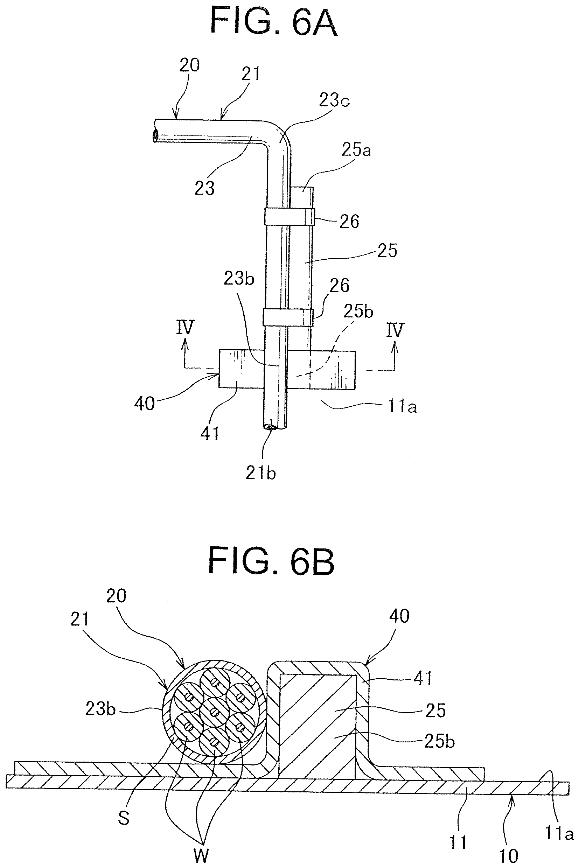

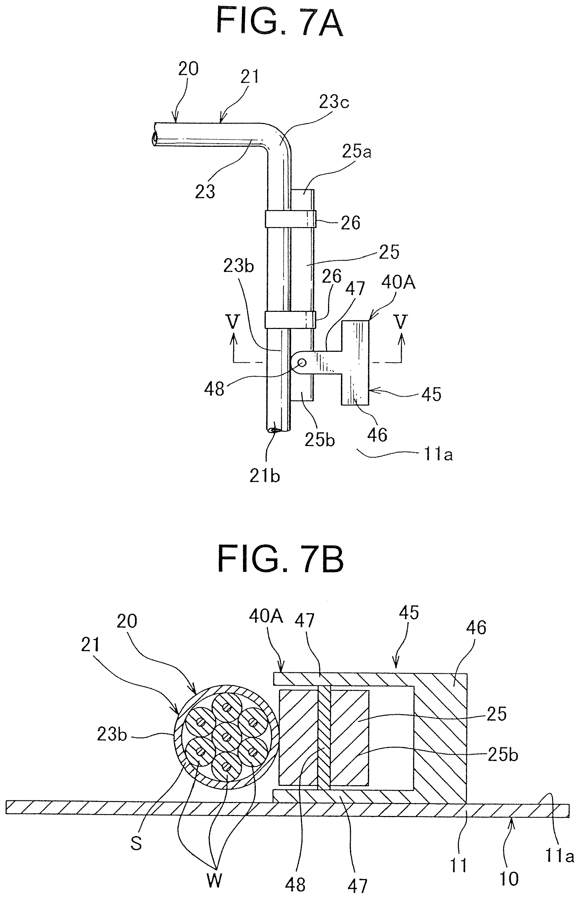

In the embodiment described above, the second mounting member 40 includes the adhesive tape 41 for mounting the other end 25b of the harness support 25 and the other end 23b of the proximal end portion 23 to the interior panel 10; however the present invention is not limited to this. For example, as shown in Fig. 6A and Fig. 6B, only the other end 25b of the harness support 25 may be movably mounted to the interior panel 10 (movable along the interior panel 10) using the adhesive tape 41. Alternatively, as shown in Fig. 7A and Fig. 7B, the second mounting member 40 may be a clamp 45 in place of the adhesive tape 41. This clamp 45 includes a body 46 fixed to the interior panel 10, a pair of bearings 47 extending from the body 46 along the interior panel 10 and in parallel with respect to each other with a space between each other, and a pivot 48 supported by the pair of bearings 47 at both ends of the pivot 48. The pivot 48 is passed through a pivot hole 25c provided adjacent to the other end 25b of the harness support 25, thereby mounting the harness support 25 to the interior panel 10 such that the harness support 25 can move along the interior panel 10. As described above, the structure of the second mounting member 40 may be arranged arbitrarily as long as the harness support 25 is mounted to the interior panel 10 so as to move along the interior panel 10.

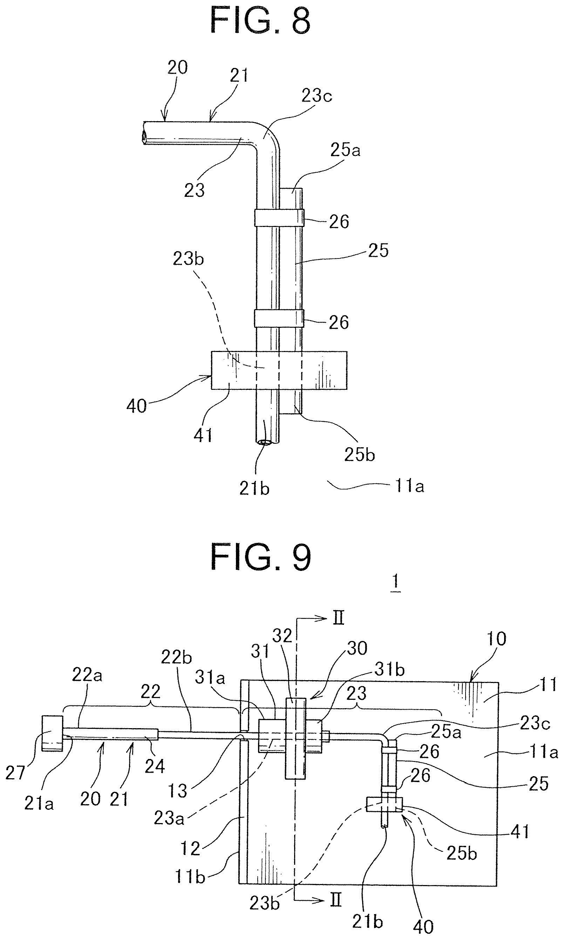

In the embodiment described above, although the adhesive tape 41 of the second mounting member 40 is provided at the other end 25b of the harness support 25; however the adhesive tape 41 may be provided at a location on the harness support 25 in vicinity of the other end 25b which is closer to the one end 25a, as shown in Fig. 8. By doing so, when the distal end portion 22 is moved toward the outer edge 11 b to be pushed into the interior panel 10 and there is applied an external force to the one end 25a of the harness support 25 to lift the one end 25a in a direction perpendicular to the interior panel 10 (for example due to a curve existing in the proximal end portion 23), the adhesive tape 41 serves to prevent this lifting of the distal end portion 25a from the interior panel 10, because the harness support 25 is fixed to the interior panel 10 by the adhesive tape 41 provided at the portion of the harness support 25 relatively close to the one end 25a. Thus, the direction of the curve of the wire harness 20 can be regulated. In addition, the longer the harness support 25, the longer the portion of the extra length portion 23c supported by the harness support 25, further advantageously regulating the direction of the curve of the wire harness 20.

In an alternative embodiment, the corrugated tube 31 of the first mounting member 30 may be replaced with a relatively short corrugated tube 31 which is disposed inside of the interior panel 10. In this case, only the one end 23a of the proximal end portion 23 is inserted into the corrugated tube 31. Also, the notch 13 may be arranged to have a width smaller than the outer diameter of the cover 24 covering the distal end portion 22 such that the cover 24 can serve as a stopper to limit the range of movement of the distal end portion 22. Alternatively, the first mounting member 30 may be arranged arbitrarily as long as the distal end portion 22 can move in the direction of adjusting the length of the distal end portion 22.

Furthermore, although in the exemplary embodiment described above, the wire harness 20 is provided with the main line (not shown) and the branch line 21; however the wire harness 20 may have plurality of branch lines or no branch lines at all (i.e. only one main line).

As described above, the embodiments described herein are only representative embodiments and are not intended to limit the present invention. It will be understood that various modifications to the embodiments may be made within the scope of the claims.

## Claims

1. A wire harness wiring unit provided to a base plate (10) adapted to be mounted to a vehicle body, the wire harness wiring unit (5) comprising:
a wire harness (20) having a distal end portion (22) extending from an outer edge (11 b) of the base plate (10) and a proximal end portion (23) continuous with the distal end portion (22), the proximal end portion (23) being mounted to the base plate (10) and provided with an extra length portion (23c) with a predetermined length located between one end (23a) of the proximal end portion (23) and the other end (23b) of the proximal end portion (23) located opposite to the one end (23a);
a first mounting member (30) for mounting the one end (23a) of the proximal end portion (23) of the wire harness (20) to the base plate (10) such that the distal end portion (22) of the wire harness (20) is movable in a direction of adjusting a length of the distal end portion (22);
a rod-like harness support (25) fixed to the proximal end portion (23) from the other end (23b) of the proximal end portion (23) to the extra length portion (23c) in parallel with the proximal end portion (23); and
a second mounting member (40) for mounting, to the base plate (10), a portion of the harness support (25) adjacent to the other end (23b) of the proximal end portion (23) such that a position of the portion of the harness support (25) adjacent to the other end (23b) of the proximal end portion (23) is fixed and the harness support (25) is movable along the base plate (10),
wherein when a force is applied to the distal end portion (22) in the direction of adjusting the length of the distal end portion (22), the first mounting member (30) holds the one end (23a) of the proximal end portion (23) in a manner that the one end (23a) slidably moves with respect to the first mounting member (30).

2. The wire harness (20) wiring unit as described in claim 1, wherein the second mounting member (40) includes an adhesive member (41) adhered to the base plate (10).

3. The wire harness (20) wiring unit as described in claim 1 or 2, wherein the distal end portion (22) of the wire harness (20) is provided with a cover (24) covering around the distal end portion (22).

## Patentansprüche

1. Eine Kabelbaumverdrahtungseinheit, die an einer Basisplatte (10) bereitgestellt ist, die adaptiert ist, um an einem Fahrzeugkörper montiert zu werden, die Kabelbaumverdrahtungseinheit (5) weist auf:
einen Kabelbaum (20) mit einem distalen Endabschnitt (22), der sich von einer äußeren Kante (11b) der Basisplatte (10) erstreckt und mit einem proximalen Endabschnitt (23), der mit dem distalen Endabschnitt (22) fortlaufend ist, der proximale Endabschnitt (23) ist an der Basisplatte (10) montiert und mit einem extra Längenabschnitt (23c) bereitgestellt mit einer vorbestimmten Länge lokalisiert zwischen einem Ende (23a) des proximalen Endabschnitts (23) und dem anderen Ende (23b) des proximalen Endabschnitts (23), der gegenüber dem einen Ende (23a) lokalisiert ist,
ein erstes Montageglied (30) zum Befestigen des einen Endes (23a) des proximalen Endabschnitts (23) des Kabelbaums (20) an der Basisplatte (10), so dass der distale Endabschnitt (22) des Kabelbaums (20) in einer Richtung des Justierens einer Länge des distalen Endabschnitts (22) bewegbar ist,
eine stabförmige Strangstütze (25), die an dem proximalen Endabschnitt (23) von dem anderen Ende (23b) des proximalen Endabschnitts (23) zu dem extra Längenabschnitt (23c) parallel mit dem proximalen Endabschnitt (23) fixiert ist, und
ein zweites Montageglied (40) zum Befestigen eines Abschnitts der Strangstütze (25) an der Basisplatte (10) benachbart zu dem anderen Ende (23b) des proximalen Endabschnitts (23), so dass eine Position des Abschnitts der Strangstütze (25) neben dem anderen Ende (23b) des proximalen Endabschnitts (23) fixiert ist und die Strangstütze (25) entlang der Basisplatte (10) beweglich ist, wobei wenn eine Kraft auf den distalen Endabschnitt (22) in der Richtung des Justierens der Länge des distalen Endabschnitts (22) ausgeübt wird, hält das erste Montageglied (30) das eine Ende (23) des proximalen Endabschnitts (23) in einer Art, dass sich das eine Ende (23a) gleitend in Bezug zu dem ersten Montageglied (30) bewegt.

2. Die Kabelbaumverdrahtungseinheit (20) wie im Anspruch 1 beschrieben, wobei das zweite Montageglied (40) ein Klebeglied (41) beinhaltet, dass an die Basisplatte (10) geklebt ist.

3. Die Kabelbaumverdrahtungseinheit (20) wie in Anspruch 1 oder 2 beschrieben, wobei der distale Endabschnitt (22) des Kabelbaums (20) mit einer Abdeckung (24) zum Abdecken des distalen Endabschnitts (22) herum bereitgestellt ist.

## Revendications

1. Unité de câblage d'un faisceau de câbles prévue sur une plaque de base (10) conçue pour être montée sur la carcasse d'un véhicule, l'unité de câblage de faisceau de câbles (5) comprenant :
un faisceau de câbles (20) dont une partie d'extrémité distale (22) s'étend depuis le bord externe (11b) de la plaque de base (10), et dont une partie d'extrémité proximale (23) est continue avec la partie d'extrémité distale (22), la partie d'extrémité proximale (23) étant montée sur la plaque de base (10) et dotée d'une partie de longueur supplémentaire (23c) présentant une longueur prédéterminée, située entre une extrémité (23a) de la partie d'extrémité proximale (23) et l'autre extrémité (23b) de la partie d'extrémité proximale (23) située à l'opposé de la première extrémité (23a),
un premier élément de montage (30) permettant de monter la première extrémité (23a) de la partie d'extrémité proximale (23) du faisceau de câbles (20) sur la plaque de base (10) de sorte à ce que la partie d'extrémité distale (22) du faisceau de câbles (20) soit mobile dans la direction de réglage de la longueur de la partie d'extrémité distale (22),
un support de faisceau de type à tige (25), fixé à la partie d'extrémité proximale (23) à partir de l'autre extrémité (23b) de la partie d'extrémité proximale (23) sur la partie de longueur supplémentaire (23c) parallèlement à la partie d'extrémité proximale (23), et
un second élément de montage (40) permettant de monter sur la plaque de base (10) une partie du support de faisceau (25) adjacente à l'autre extrémité (23b) de la partie d'extrémité proximale (23) de sorte à ce que la position de la partie du support de faisceau (25), adjacente à l'autre extrémité (23b) de la partie d'extrémité proximale (23), soit fixée ; et le support de faisceau (25) est mobile le long de la plaque de base (10),
dans laquelle, lorsqu'une force est appliquée sur la partie d'extrémité distale (22) dans la direction de réglage de la longueur de la partie d'extrémité distale (22), le premier élément de montage (30) maintient la première extrémité (23a) de la partie d'extrémité proximale (23) de manière à ce que la première extrémité (23a) se déplace en coulissant par rapport au premier élément de montage (30).

2. Unité de câblage de faisceau de câbles (20) selon la revendication 1, dans laquelle le second élément de montage (40) inclut un élément adhésif (41) collé à la plaque de base (10).

3. Unité de câblage de faisceau de câbles (20) selon la revendication 1 ou la revendication 2, dans laquelle la partie d'extrémité distale (22) du faisceau de câbles (20) est munie d'une enveloppe (24) de recouvrement autour de la partie d'extrémité distale (22).
